Europäisches Patentamt

European Patent Office

Office européen des brevets

(11) Publication number: **0 170 131**
**B1**

## EUROPEAN PATENT SPECIFICATION

(45) Date of publication of patent specification: **04.10.89**

(21) Application number: **85108689.2**

(22) Date of filing: **11.07.85**

(51) Int. Cl.⁴: **F 02 B 31/00, F 02 F 1/42**

(54) Internal combustion engine with intake ducts arranged to produce high turbulence in the feed air flow.

(30) Priority: **27.07.84 IT 6774884**

(43) Date of publication of application:
**05.02.86 Bulletin 86/06**

(45) Publication of the grant of the patent:
**04.10.89 Bulletin 89/40**

(84) Designated Contracting States:
**DE FR GB**

(56) References cited:
**DE-A-2 921 300**
**FR-A-2 359 972**
**GB-A- 825 837**

(73) Proprietor: **FIAT AUTO S.p.A.**
**Corso Giovanni Agnelli 200**
**I-10135 Torino (IT)**

(72) Inventor: **Urbinati, Mario**
**Via Rismondo, 24**
**I-10100 Torino (IT)**

(74) Representative: **Bongiovanni, Guido et al**
**c/o Ingg. Carlo e Mario Torta Via Viotti 9**
**I-10121 Torino (IT)**

## Description

This invention relates to a high-turbulence internal combustion engine, in particular of the high-speed diesel type, which is provided with intake ducts configured in such a manner as to be able to produce high vorticity in the engine feed air flow.

In internal combustion engines, and in particular in small-displacement diesel engines, it is particularly important to feed the air with the correct degree of turbulence in order to obtain uniform mixing of air and fuel. To attain this, numerous expedients are known such as providing the intake valve of each engine cylinder with a deflector fin, or using volute-shaped intake ducts as shown in DE—A—29 21 300. These systems, well known to experts of the art, enable the desired vorticity index to be obtained, but have the serious drawback of being incapable of adjusting the vorticity index to the engine rotational speed. Basically, with the aforesaid systems, vorticity indices are obtained which are ideal only for a limited range of engine operation, whereas when the engine rotational speed lies outside this range, the vorticity does not adapt to the required engine characteristics.

It is also known from GB—A—825 837 to provide the intake ducts of each couple of adjacent cylinders in side by side relationship and to connect such adjacent intake ducts to each other by means of a by-pass cavity. Nevertheless also such a system does not ensure an optimum vorticity to be reached in every condition of the engine operation.

The object of the present invention is to provide an internal combustion engine comprising intake ducts of a geometry such as to produce high vorticity in the engine feed air flow and to adjust the vorticity index to the optimum value for the various engine rotational speeds.

Said object is attained according to the present invention by a high-turbulence internal combustion engine, particularly of the high-speed direct injection diesel type, comprising at least a first and a second cylinder which are arranged side-by-side and a cylinder head; said cylinders and said cylinder head bordering a pair of combustion chambers; said cylinder head being provided with a respective intake port and a respective exhaust port for each combustion chamber, means to open and to close said ports, at least one first intake duct of volute type connected to said intake port of said first combustion chamber and a second intake duct of volute type connected to said intake port of said second combustion chamber, wherein said intake ports and said first and second intake duct of said first and second chamber are disposed in adjacent side-by-side positions between the respective said exhaust ports of said first and second chamber, and wherein said first and second volute duct are oriented in the reverse direction to each other, characterized in that said cylinder head comprises two cavities provided in positions corresponding with the intake ports and defining a pair of tangential communication ports connecting together said first and second intake duct; the thermodynamic cycles of said first and second combustion chamber being staggered by an extent such as to maintain the intake port of the first chamber closed when that of the second chamber is open and vice versa, so that the air conveyed by said first volute intake duct is conveyed tangentially into said second volute intake duct through said communication ports and drawn in by said second chamber, and vice versa.

The present invention will be apparent from the non-limiting description of one embodiment thereof given hereinafter with reference to the accompanying drawing, in which:

Figure 1 is a partially sectional, simplified plan view of an internal combustion engine constructed in accordance with the present invention; and

Figures 2 and 3 are respective sections on the lines II and III of the engine of Figure 1.

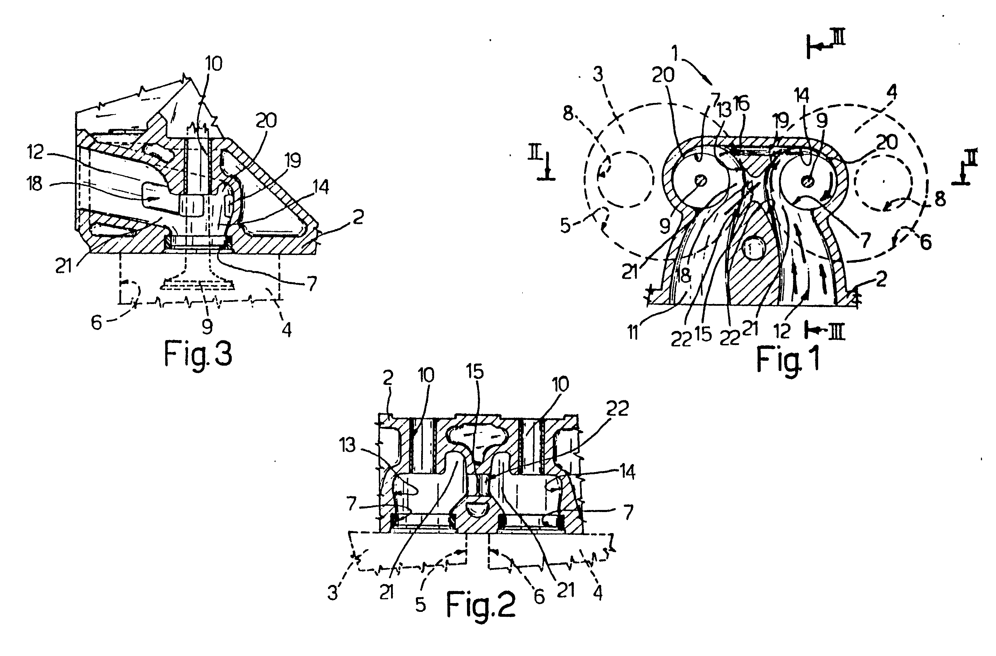

In Figures 1 and 2, the reference numeral 1 indicates overall an internal combustion engine of any known type, for example a high-speed direct injection diesel engine, of which there are shown for simplicity only part of the cylinder head 2 and, by dashed lines, a pair of side-by-side combustion chambers 3 and 4 defined by respective cylinders 5 and 6 formed in the cylinder block, not shown for simplicity, and by the cylinder head 2. According to the invention, the engine 1 must be of the type comprising an even number of cylinders divided into one or more pairs of side-by-side cylinders 5 and 6, as shown in Figure 1. Each chamber 3 and 4 is provided with a respective intake port 7 and with a respective exhaust port 8 provided in the cylinder head 2 and closable (Figure 3) by respective valves 9 slidable in guides 10 in the cylinder head 2 and operated in known manner, not shown for simplicity. The cylinder head 2 is also provided with exhaust ducts, not shown for simplicity, and with at least one pair of intake ducts 11 and 12 of the volute type, which are connected respectively to the intake ports 7 of the respective cylinders 5 and 6.

According to the invention the intake ports 7 and the volute intake ducts 11 and 12 of each pair of chambers 3 and 4 (or of cylinders 5 and 6) are disposed in adjacent, side-by-side positions between the respective exhaust ports 8 of the side-by-side chambers 3 and 4, and the volute ducts 11 and 12 have the same geometry and the same dimensions but are orientated in different directions to each other. For example, the duct 11 is formed with a volute 13 which winds anticlockwise, whereas the duct 12 is formed with a volute 14 which winds clockwise. The volutes 13 and 14 are disposed in positions corresponding with the adjacent intake ports 7, coaxially thereto and above them, and constitute the terminal part of the ducts 11 and 12, which are connected in known manner, not shown for simplicity, to the feed manifold of the engine 1. According to the invention, the cylinder head 2 also comprises at least one cavity arranged to connect together the opposing volute intake ducts 11 and 12 of each pair of side-by-side cylinders 5 and 6. In particular, the cylinder head 2 is provided with two respective cavities 15 and 16 for each pair of side-by-side cylinders 5 and 6, formed in positions corresponding with the intake ports 7, exactly between the volutes 13 and 14, to define a pair of tangential communication ports 18 and 19 which connect the ducts 11 and 12 together at the volutes 13 and 14.

According to the invention, the port 19 peripherally connects a terminal part 20 of each volute 13 and 14 together, and is substantially rectilinear and disposed transversely to the axis of the cylinders 5 and 6, whereas the port 18 connects together respective mouth zones 21 of the volutes 13 and 14 and is defined by respective curved surfaces 22 directed tangentially to the volutes 13 and 14. Finally, according to the invention the engine timing and the movement of the pistons (not shown for simplicity) of the cylinders 5 and 6 are such that the thermodynamic cycles of each cylinder 5 and 6 of the pair (or of each pair in the case of an engine with four or more cylinders) of side-by-side cylinders are staggered by an extent such as to maintain the intake port 7 of the cylinder 5 closed when the intake port of the cylinder 6 is open and vice versa. In this manner, each cylinder 5 and 6 of each pair of side-by-side cylinders of the engine 1 is served by both intake ducts 11 and 12, in that these latter are connected together by the ports 18 and 19 and only one of the intake ports 7 of the cylinders 5 and 6 is open during the intake stage of each cylinder.

The shape of the ducts 11 and 12 and relative volutes 13 and 14 is well visible on the accompanying drawing and is not further described for simplicity, in that intake ducts of volute type are well known to any expert of the art.

Furthermore according to the invention, the shape, dimensions and position of the ducts 11 and 12 and ports 18 and 19 have been determined such that said ducts and the cavities 15 and 16 are able to be produced by using a single core during the casting of the cylinder head 2. In this manner, as the ducts 11 and 12 are formed simultaneously, the constructional precision of the engine cylinder heads 2 formed according to the invention is increased in that as the intake ducts of each pair of side-by-side cylinders are connected together, there are no longer any errors due to deformation or to incorrect positioning of the cores for the ducts during said casting of the cylinder head 2.

The operation of the described engine 1 is as follows. Considering a pair of side-by-side cylinders 5 and 6 with their intake ports 7 connected together by the ducts 11 and 12 and ports 18 and 19 according to the invention, and assuming for example that the cylinder 6 is in the intake stage, ie with the port 7 open and consequently the cylinder 5 has its port 7 closed, for example exhausting, the feed air flow shown by arrows in Figure 1 is drawn mainly through the duct 12 closer to the open port 7, and partly through the duct 11 which, by communicating with the duct 12 through the ports 18 and 19, is also put under vacuum together with the duct 12 by the opening of the port 7. Consequently, a main feed air flow enters the volute 14 through the duct 12 and is caused to rotate thereby in known manner before being fed into the cylinder 6 through the port 7, and a second feed air flow drawn through the duct 11 is fed into the volute 13 where it is also rotated and where, finding the port 7 of this latter closed, favours the generation, by virtue of the presence of the ports 18 and 19, of oscillatory phenomena in the air masses present in the ducts 11 and 12. Subsequently, the secondary air flow is also drawn in through the port 7 of the cylinder 6 by passing into the volute 14 through said ports 18 and 19. Because of the tangential and peripheral position of the port 19 and the profile of the surfaces 22 defining the port 18, which is also tangential to the volutes 13 and 14, the secondary feed air flow originating from the duct 11 is introduced tangentially into the volute 14 besides being introduced into its mouth zone 21, thus favouring not only said oscillatory phenomena in the ducts but also the generation of feed air flow turbulence inside said volute and its preservation as the rotational speed of the engine 1 varies.

By properly dimensioning the ducts 11 and 12, these phenomena can be intensified, particularly at low rotational speeds, thus enabling homogeneous mixing of air and fuel to be obtained for each rotational speed of the engine 1. Moreover, as the cross-section of the intake duct in the engine according to the invention is substantially increased (as both the intake ducts of each pair of adjacent cylinders serve each cylinder), a reduction in the air velocity at the volutes 13 and 14 is obtained, to result in an increase in the volumetric efficiency compared with engines of known type. That described for the cylinder 6 is clearly also applicable to the cylinder 5 when its port 7 opens, with simultaneous closure of the port 7 of the cylinder 6 because of said staggering of their thermodynamic cycles.

## Claims

1. A high-turbulence internal combustion engine (1), particularly of the high-speed direct injection diesel type, comprising at least a first (5) and a second (6) cylinder which are arranged side-by-side and a cylinder head (2); said cylinders (5, 6) and said cylinder head (2) bordering a pair of combustion chambers (3, 4); said cylinder head (2) being provided with a respective intake port (7) and a respective exhaust port (8) for each combustion chamber (3, 4), means to open and to close said ports (7, 8), at least one first intake duct (11) of volute type connected to said intake port (7) of said first combustion chamber (3) and a second intake duct (12) of volute type connected to said intake port (7) of said second combustion chamber (4), wherein said intake ports (7) and said first and second intake duct (11, 12) of said first and second chamber (3, 4) are disposed in adjacent side-by-side positions between the respective said exhaust ports (8) of said first and second chamber (3, 4), and wherein said first and second volute duct (11, 12) are orientated in the reverse direction to each other, characterized in that said cylinder head (2) comprises two cavities (15, 16) provided in positions corresponding with the intake ports (7) and defining a pair of tangential communication ports (18, 19) connecting together said first and second intake duct (11, 12); the thermodynamic cycles of said first and second combustion chamber (3, 4) being staggered by an extent such as to maintain the intake port (7) of the first chamber (3) closed when that of the second chamber (4) is open and vice versa, so that the air conveyed by said first volute intake duct (11) is conveyed tangentially into said second volute intake duct (12) through said communication ports (18, 19) and drawn in by said second chamber (4), and vice versa.

2. An engine (1) as claimed in claim 1, characterized in that said engine (1) comprises a plurality of pairs of said combustion chambers each pair being provided with said two cavities for connecting together said first and second intake duct (11, 12).

3. An engine (1) as claimed in one of the preceding claims, characterized in that said first and second intake duct (11, 12) and said cavity (15, 16) may be obtained by using a single core during the casting of said cylinder head (2).

**Patentansprüche**

1. Hochwirbelverbrennungsmotor (1), insbesondere vom Typ eines Hochgeschwindigkeits-Dieselmotors mit direkter Einspritzung, bestehend aus mindestens einem ersten (5) und einem zweiten (6) Zylinder, die nebeneinander liegen und einem Zylinderkopf (2); besagte Zylinder (5, 6) und besagter Zylinderkopf (2) grenzen an ein Paar Verbrennungskammern (3, 4); besagter Zylinderkopf (2) ist mit einem entsprechenden Ansaugkanal (7) und einem entsprechenden Auslaßkanal (8) für jede Verbrennungskammer (3, 4) versehen, mit Vorrichtungen, um die besagten Kanäle (7, 8) zu öffnen und zu schließen, mindestens einem ersteren spiralförmigen Ansaugrohr (11), verbunden mit besagtem Ansaugkanal (7) der besagten ersten Verbrennungskammer (3) und einem zweiten spiralförmigen Ansaugrohr (12), verbunden mit besagtem Ansaugkanal (7) der besagten zweiten Verbrennungskammer (4), wobei besagte Ansaugkanäle (7) und besagtes erstes und zweites Ansaugrohr (11, 12) der besagten ersten und zweiten Kammer (3, 4) sich in benachbarter Stellung, Seite an Seite, zwischen den entsprechenden besagten Auslaßkanälen (8) der ersten und zweiten Kammer (3, 4) befinden, und wobei ersteres und zweiteres spiralförmiges Rohr (11, 12) in zueinander entgegengesetzter Richtung ausgerichtet sind, dadurch gekennzeichnet, daß besagter Zylinderkopf (2) aus zwei Vertiefungen (15, 16) besteht, die sich in, mit den Ansaugrohren (7) übereinstimmender, Stellung befinden und ein Paar seitliche Verbindungsrohre (18, 19) darstellen, die besagtes ersteres und zweites Ansaugrohr (11, 12) miteinander verbinden; der thermodynamische Kreislauf der ersten und zweiten Verbrennungskammer (3, 4) wird in dem Maße gestaffelt, daß der Ansaugkanal (7) der ersten Kammer (3) geschlossen gehalten wird, solange der der zweiten Kammer (4) offen ist und umgekehrt, so daß die Luft, die durch das erste spiralförmige Ansaugrohr (11) transportiert wird, seitlich in das zweite spiralförmige Ansaugrohr (12) über die besagten Verbindungsrohre (18, 19) gelangt und von der zweiten Kammer (4) angesaugt wird und umgekehrt.

2. Motor (1) nach Anspruch 1, dadurch gekennzeichnet, daß besagter Motor (1) aus einer Anzahl besagter Verbrennungskammerpaaren besteht, wobei jedes Paar mit den besagten beiden Vertiefungen zur Verbindung des ersten mit dem zweiten Ansaugrohr (11, 12) versehen ist.

3. Motor (1) nach einem der vorangegangenen Ansprüche, dadurch gekennzeichnet, daß ersteres und zweites Ansaugrohr (11, 12) und besagte Vertiefung (15, 16) durch die Benutzung eines einzigen Kerns während der Fusion des besagten Zylinderkopfes (2) erlangt werden können.

**Revendications**

1. Moteur à combustion interne à turbulence élevée (1), notamment du type diesel rapide à injection directe, comprenant au moins un premier cylindre (5) et un deuxième cylindre (6) qui sont disposés côte à côte et une culasse (2), ces cylindres (5, 6) et cette culasse (2) délimitant une paire de chambres de combustion (3, 4), la culasse (2) comportant un orifice d'admission respectif (7) et un orifice d'échappement respectif (8) pour chaque chambre de combustion (3, 4), des moyens pour ouvrir et fermer ces orifices (7, 8), au moins un premier conduit d'admission (11) en forme de volute raccordé à l'orifice d'admission (7) de la première chambre de combustion (3) et un deuxième conduit d'admission (12) en forme de volute raccordé à l'orifice d'admission (7) de la deuxième chambre de combustion (4), les orifices d'admission (7) et le premier et le deuxième conduit d'admission (11, 12) de la première et de la deuxième chambre (3, 4) étant disposés côte à côte dans des positions adjacentes entre les orifices d'échappement respectifs (8) de la première et de la deuxième chambre (3, 4), le premier et le deuxième conduit en forme de volutes (11, 12) étant orientés en sens inverse l'un par rapport à l'autre, caractérisé en ce que la culasse (2) comprend deux cavités (15, 16) situées dans des positions correspondant aux orifices d'admission (7) et définissant deux passages de communication tangentiels (18, 19) raccordant ensemble le premier et le deuxième conduit d'admission (11, 12), les cycles thermodynamiques de la première et de la deuxième chambre de combustion (3, 4) étant décalés de façon à maintenir fermé l'orifice d'admission (7) de la première chambre (3) lorsque celui de la deuxième chambre (4) est ouvert et vice versa, de sorte que l'air arrivant par le premier conduit d'admission en forme de volute (11) est transféré tangentiellement dans le deuxième conduit d'admission en forme de volute (12) à travers ces passages de communication (18, 19) et est aspiré par le deuxième chambre (4) et vice versa.

2. Moteur (1) selon la revendication 1, caractérisé en ce qu'il comprend une multiplicité de paires de chambres de combustion, chaque paire comportant ces deux cavités pour raccorder ensemble le premier et le deuxième conduit d'admission (11, 12).

3. Moteur selon l'une des revendications précédentes, caractérisé en ce que le premier et le deuxième conduit d'admission (11, 12) et ces cavités (15, 16) peuvent être obtenus en utilisant un seul noyau lors de la coulée de la culasse (2).

Fig.3

Fig.1

Fig.2

EP 0 170 131 B1